Europäisches Patentamt

European Patent Office

Office européen des brevets

(11) Numéro de publication: **0 470 316 A1**

## DEMANDE DE BREVET EUROPEEN

(21) Numéro de dépôt: **90402272.0**

(22) Date de dépôt: **09.08.90**

(51) Int. Cl.⁵: **G02C 1/08**

(43) Date de publication de la demande:
**12.02.92 Bulletin 92/07**

(84) Etats contractants désignés:
**AT BE CH DE DK ES GB GR IT LI LU NL SE**

(71) Demandeur: **Ragonot, Christian**
**35, rue Etienne Marcel**
**F-75002 Paris(FR)**

(72) Inventeur: **Ragonot, Christian**
**35, rue Etienne Marcel**
**F-75002 Paris(FR)**

(54) **Montures de lunettes démontables.**

(57) Montures de lunettes dont les cercles sont fendus et comportant un organe de serrage entre chaque branche et le cercle correspondant.

Selon l'addition, un insert (40) portant un tenon de positionnement (41) est solidaire d'un prolongement en saillie (33) du cercle et le tenon est susceptible de s'engager dans un trou (34) d'un autre prolongement en saillie.

FIG.2

L'invention concerne une monture de lunettes et elle a plus particulièrement pour objet un perfectionnement permettant de dissocier, soi-même, les verres de la monture.

Dans le domaine de la lunetterie les cercles sont soit continus et la lentille est mise en place par déformation de ceux-ci, soit ils sont discontinus et présentent une fente telle que décrit dans le brevet n° 2.151.597, celle-ci étant maintenue fermée à l'aide d'une vis. De tels systèmes présentent l'inconvénient de nécessiter l'intervention de spécialistes lorsqu'il s'agit de remplacer les verres ou la monture.

On ne connaît pas à ce jour de montures spécifiquement conçues pour permettre au simple usager leur interchangeabilité tout en conservant par exemple les mêmes lentilles.

L'invention apporte une solution à ce problème en proposant un nouveau moyen de serrage du cercle, simple, peu coûteux et maniable par un usager non outillé et non spécialisé. Ainsi la monture devient un nouvel accessoire de l'habillement. Dans cet esprit, l'invention concerne donc une monture de lunettes comportant deux cercles et deux branches articulées à ces cercles, caractérisée en ce que chaque cercle est fendu au voisinage de la branche correspondante et en ce qu'un organe de serrage de ladite fente est monté sur les moyens d'articulation prévus entre la branche et le cercle.

Selon un mode de réalisation simple et efficace, l'organe de serrage est monté pivotant sur l'axe du moyen d'articulation pour venir coopérer, au voisinage de la fente, avec un prolongement en saillie dudit cercle.

L'invention sera mieux comprise et d'autres avantages de celle-ci apparaîtront mieux à la lumière de la description qui va suivre d'une monture de lunettes conforme au principe de l'invention, donnée uniquement à titre d'exemple et faite en référence aux dessins non limitatifs annexés, dans lesquels :

- la figure 1 est une vue schématique en élévation de la monture de lunettes conforme à l'invention;
- la figure 2 est une vue de détail à plus grande échelle illustrant plus particulièrement les moyens de l'invention;
- la figure 3 est une vue d'un organe de serrage de forme voisine de celle réalisée dans la figure 2;
- la figure 4 est une vue d'organe de serrage avec articulation;
- la figure 5 est une vue en coupe des moyens de l'invention;
- la figure 6 est une vue partielle en élévation d'une autre monture de lunette conforme à l'invention;

- la figure 7 est une vue schématique éclatée, de côté, illustrant les éléments conforme à l'invention d'une autre monture de lunette;
- la figure 8 est une coupe VIII-VIII de la figure 7;
- la figure 9 est une coupe IX-IX de la figure 7; et
- la figure 10 est une vue de détail illustrant un agencement permettant d'assurer un positionnement correct d'un verre et notamment d'un verre correcteur.

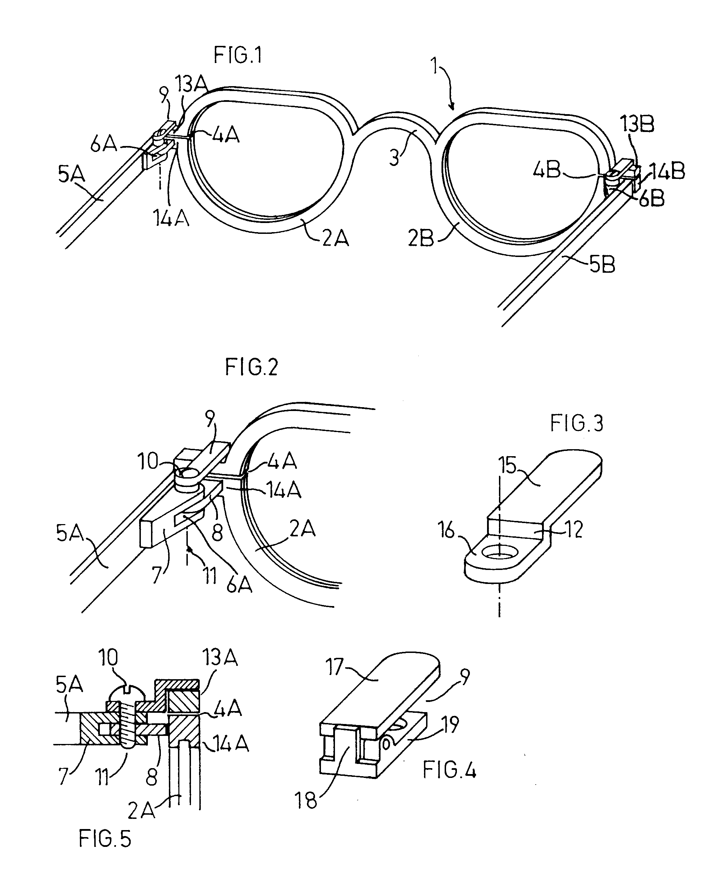

En se reportant aux dessins, on a représenté (figure 1) une monture de lunettes 1 comportant deux cercles 2A, 2B reliés entre eux par un pont 3, chaque cercle présente des prolongements en saillie 13A, 13B et 14A, 14B qui définissent respectivement une fente 4A et 4B au voisinage d'une branche 5A, 5B à laquelle il se trouve relié par des moyens d'articulation 6A, 6B classiques. Les moyens d'articulation 6A, 6B sont constitués pour chaque articulation d'une chape 7 (figure 2) solidaire ici de la branche 5A et d'un tenon 8 solidaire de l'un des prolongements en saillie 14A du cercle 2A, une vis 10 maintient en rotation la chape autour d'un axe 11 (figure 5) confondu avec celui du tenon et le traversant. Selon un mode de réalisation, un organe de serrage 9 apte à refermer la fente est monté pivotant sur l'axe de rotation 11 commun à la chape 7 et au tenon 8. Il vient par frottement au voisinage de la fente 4A compresser le prolongement en saillie 13A du cercle 2A pour refermer la fente 4A. L'organe de serrage 9 est une pièce de forme allongée percée à l'une de ses extrémités pour permettre le passage de la vis 10. L'organe de serrage représenté à la figure 3 diffère de celui de la figure 2 par une forme plus complexe en S à deux niveaux sensiblement parallèles 15 et 16, décalés et reliés par un élément transversal 12.

Selon un autre mode de réalisation, l'organe de serrage 9 (figure 4) de forme générale en C, comporte une partie 19 montée fixe sur une chape 7 à l'aide de la vis 10 et une partie basculante 17 sollicitée par un ressort 18 en direction du prolongement en saillie 13A avec lequel il coopère. Selon un autre mode de réalisation non représenté, la coopération de l'organe de serrage avec les prolongements en saillie des cercles se trouve améliorée par la présence d'un bossage qui viendrait s'encastrer dans une cuvette prévue dans ledit prolongement.

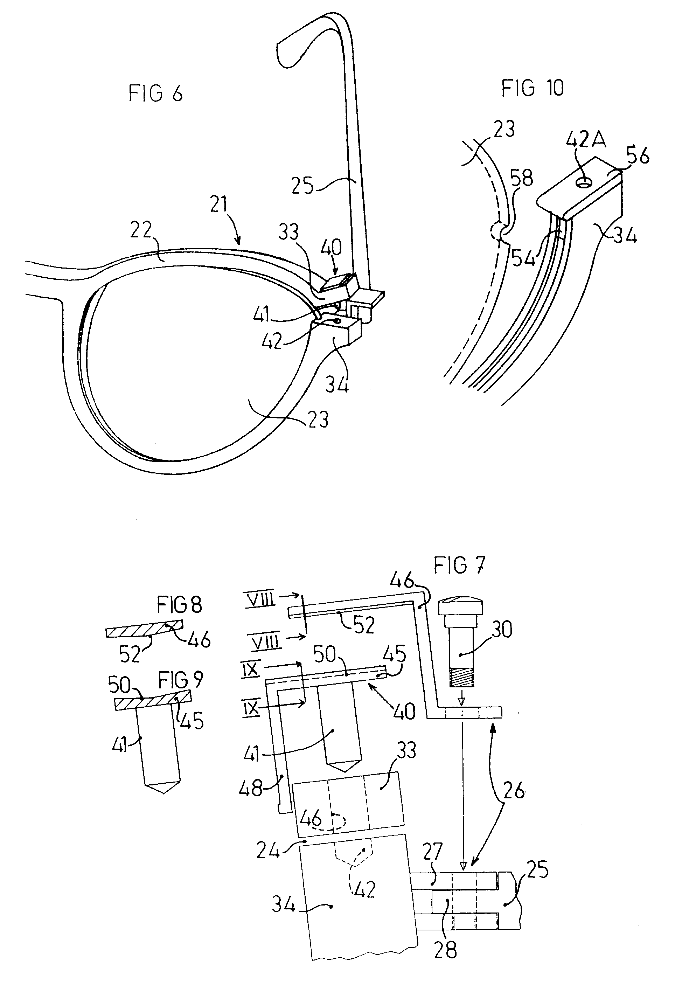

En se reportant plus particulièrement aux figures 6 et suivantes, on a représenté une partie d'une monture de lunettes 21 et notamment un cercle 22 susceptible d'accueillir un verre 23 formant éventuellement lentille. L'autre partie de la monture est bien entendu identiquement symétrique. Les modes de réalisation des figures 6 et 7 ne diffèrent que par des détails qui seront décrits plus loin. Le cercle comporte deux prolongements en saillie, respectivement un premier prolongement en saillie 33, supérieur, et un second prolongement en saillie 34, inférieur. Ceux-ci définissent une fente 24 du cercle 22 au voisinage d'une branche 25. Le cercle 22 se trouve rattaché à la branche par des moyens d'articulation 26 comprenant une chape 27, solidaire, ici, du second prolongement en saillie 34, d'un tenon 28, solidaire, ici, de la branche 25 et d'une vis d'assemblage 30.

Dans ces deux modes de réalisation, un insert 40 est monté sur l'un des prolongements en saillie, ici le premier prolongement en saillie 33, et cet insert comprend un tenon de positionnement 41 dirigé vers l'autre prolongement en saillie (ici ledit second prolongement en saillie 34). Ce dernier est percé d'un trou 42 susceptible de recevoir le tenon de positionnement 41.

Un organe de serrage 46, en forme générale de Z, est monté sur la chape 27 à l'aide de la vis 30 et coopère avec ledit premier prolongement en saillie 33 pour refermer la fente 24 et assurer le maintien du verre 23 dans la gorge du cercle 22.

Plus précisément, l'insert 40 comporte aussi une plaquette supérieure 45 prenant place sur ledit premier prolongement en saillie 33 et le tenon de positionnement 41 est solidaire de cette plaquette. Il est engagé dans un trou 46 traversant ledit premier prolongement en saillie 33.

Le mode de réalisation de la figure 7 se distingue notamment par le fait que l'insert 40 comporte en outre une languette frontale 48 susceptible de venir masquer la fente 24 sur la face frontale de la monture. Cette languette frontale peut aussi servir de support à un signe distinctif. De plus, comme le montrent plus particulièrement les figures 8 et 9, la plaquette supérieure 45 comporte une surface 50 en forme de dièdre très ouvert, tandis que la face correspondante 52 de l'organe de serrage 46 a une forme de dièdre complémentaire. Cet agencement empêche un pivotement non souhaité de l'organe de serrage 46 et, par conséquent, évite tout détachement accidentel du verre 23.

La figure 10 illustre un autre perfectionnement sous la forme d'un élément de repérage engagé dans la gorge de réception 54 du verre 23 au niveau du prolongement en saillie 34. Cet élément de repérage est constitué par une plaquette 56 fixée à la surface supérieure dudit second prolongement en saillie 34 et dont le bord pénètre ainsi dans la gorge 54. Le verre 23 est muni d'une encoche latérale 58. Cet agencement permet un positionnement correct et précis du verre par rapport au cercle 22. La plaquette 56 est bien entendu munie d'un trou 42A, dans le prolongement du trou 42, pour le passage du tenon de positionnement 41.

## Revendications

1. Monture de lunettes comportant deux cercles et deux branches articulées à ces cercles, caractérisée en ce que chaque cercle (2A, 2B) est fendu au voisinage de la branche (5A, 5B) correspondante et en ce qu'un organe de serrage (9) de ladite fente (4A, 4B) est monté sur les moyens d'articulation (6A, 6B) prévus entre la branche et le cercle.

2. Monture de lunettes selon la revendication 1, caractérisée en ce que l'organe de serrage (9) manoeuvrable manuellement est monté pivotant avec frottement, sur un axe des moyens d'articulation (6A, 6B) et coopère au voisinage de la fente avec un prolongement (13A, 13B) en saillie dudit cercle venu de moulage ou d'usinage.

3. Monture de lunettes selon la revendication 2, caractérisée en ce que l'organe de serrage (9) comporte une partie basculante (17) pouvant être sollicitée en direction desdits prolongements (13A, 13B) par des moyens élastiques (18).

4. Monture de lunettes selon la revendication 2, caractérisée en ce qu'un insert (40) est monté sur un prolongement en saillie (33), en ce que cet insert comprend un tenon de positionnement (41) dirigé vers l'autre prolongement en saillie (34) et en ce que ce dernier est percé d'un trou (42) susceptible de recevoir ledit tenon de positionnement.

5. Monture de lunettes selon la revendication 4, caractérisé en ce que ledit insert comporte une plaquette supérieure (45) prenant place sur le premier prolongement en saillie cité et en ce que ledit tenon de positionnement est solidaire de cette plaquette et est engagé dans un trou (46) traversant ledit premier prolongement en saillie.

6. Monture de lunettes selon la revendication 5, caractérisé en ce que ladite plaquette supérieure comporte une surface en forme de dièdre ouvert (50) et que la face correspondante dudit organe de serrage (46) a une forme de dièdre complémentaire (52).

7. Monture de lunettes selon l'une des revendications 4 à 6, caractérisée en ce que ledit insert comporte une languette frontale (48) venant masquer ladite fente (24).

8. Monture de lunettes selon l'une des revendications précédentes, caractérisé en ce que l'un des prolongements en saillie (34) est pourvu d'un élément de repérage (56) engagé dans la gorge de réception (54) du verre (23) correspondant, pour le positionnement correct d'un tel verre muni d'une encoche latérale.

9. Monture de lunettes selon la revendication 8, caractérisée en ce que ledit élément de repérage est constitué par une plaquette (56) fixée sur un prolongement en saillie (34) et munie d'un trou (42A) pour le passage dudit tenon de positionnement.

EP 0 470 316 A1

FIG.1

FIG.2

FIG.3

FIG.4

FIG.5

5

FIG 6

FIG 10

FIG 7

FIG 8

FIG 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 454 636   (K.K. KATO KOGEI) <br> * Revendications * | 1-3 | G 02 C 1/08 |
| A | | 4 | |
| | – – – | | |
| Y | FR-A-1 049 822   (J.R.A. PRAT) <br> * Page 11, dernier paragraphe; page 2, colonne de gauche, lignes 1-23 * | 1-2 | |
| | – – – | | |
| A | US-A-3 609 018   (M. MAROLLA) <br> * Résumé; revendications * | 1-3 | |
| | – – – | | |
| A | US-A-4 747 680   (T. HATANO) <br> * Colonne 2, lignes 31-68 * | 1-2 | |
| | – – – | | |
| A | FR-A-2 140 924   (M. PITTION) <br> * Page 2, lignes 4-40; page 3 * | 1-2 | |
| | – – – | | |
| A | FR-A-2 088 820   (S.A.R.L. ROYAL PLASTIC) <br> * Revendications * | 1-2 | |
| | – – – | | DOMAINES TECHNIQUES RECHERCHES (Int. Cl.5) |
| A | EP-A-0 079 577   (F. MASCHERONI) <br> * Revendications * | 1,4 | |
| | – – – | | G 02 C 1/08 |
| A | FR-A-2 271 594   (ROYAL PLASTIC) <br> * Page 2, lignes 22-33 * | 4,7 | |
| | – – – | | |
| A | FR-A-933 981   (BAY STATE OPTICAL CO.) <br> – – – – – | | |

**Le présent rapport de recherche a été établi pour toutes les revendications**

| Lieu de la recherche | Date d'achèvement de la recherche | Examinateur |
|---|---|---|
| La Haye | 25 mars 91 | CALLEWAERT-HAEZEBROU |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
........................................................................
& : membre de la même famille, document
    correspondant